# EUROPÄISCHE PATENTANMELDUNG

(11) **EP 1 170 218 A1**
(43) Veröffentlichungstag der Anmeldung: **09.01.2002**
(21) Anmeldenummer: 01115105.7
(22) Anmeldetag: 21.06.2001
(51) Int. Cl.: B65B 61/20, B65G 57/04, B65G 60/00, B21D 43/00, B65H 5/10

(54) **Greifvorrichtung für dünne, plattenförmige Teile**

(30) Priorität: 05.07.2000 DE 10032754
(71) Anmelder: Wilfried Strothmann GmbH & Co KG Maschinenbau und Handhabungstechnik, 33758 Schloss Holte-Stukenbrock (DE)
(72) Erfinder: Massow, Rainer, 33758 Schloss Holte-Stukenbrock (DE)
(74) Vertreter: TER MEER STEINMEISTER & PARTNER GbR

(57) **Zusammenfassung**

Eine Greifvorrichtung für dünne, plattenförmige Teile, insbesondere Bleche, ist mit einer Anzahl von an der Unterseite eines Hubrahmens angeordneten Saugnäpfen (26,28,30,32) versehen. Die Saugnäpfe (26,28,30,32) sind an den äußeren Enden von vier im Kreuz angeordneten, in zwei übereinanderliegenden Ebenen längsverschiebbar geführten Zahnstangen (18,20,22,24) angebracht. Im Zentrum des durch die Zahnstangen gebildeten Kreuzes ist ein in einer senkrechten Achse gelagertes Zahnrad (46) vorgesehen, das sich über beide übereinanderliegenden Ebenen erstreckt. Die Zahnstangen (18,20,22,24) kämmen jeweils paarweise von diametral gegenüberliegenden Seiten her mit dem Zahnrad (46). Eine Steuerstange (72) mit einem Zahnstangenprofil steht in einer dritten Ebene mit dem Zahnrad (46) in Eingriff und weist an einem radial-äußeren Ende eine Eingriffseinrichtung (76) auf, durch die eine Stellkraft auf die Steuerstange zu deren Verschiebung in Längsrichtung ausgeübt werden kann.

## Beschreibung

Die Erfindung betrifft eine Greifvorrichtung für dünne, plattenförmige Teile, insbesondere Bleche, mit einer Anzahl von an der Unterseite eines Hubrahmens angeordneten Saugnäpfen.

Greifvorrichtungen mit Saugnäpfen werden in der Industrie häufig zum Vereinzeln und/oder Umsetzen von dünnen, plattenförmigen Teilen, beispielsweise Blechen verwendet. Sie eignen sich insbesondere zur Kombination mit Robotern, wenn eine weitgehend automatisierte Arbeitsweise angestrebt wird.

Sofern Greifvorrichtungen der genannten Art nicht ausschließlich in Verbindung mit einem und demselben plattenförmigen Teil verwendet werden sollen, müßten die Positionen der Saugnäpfe in gewissem Umfang verstellbar sein. Zu diesem Zweck können die Saugnäpfe an stern- oder kreuzförmigen Hubrahmen angeordnet sein, deren Arme verstellbar, insbesondere radial ausfahrbar und einziehbar sind. Eine Verstellung ist insbesondere notwendig zur Berücksichtigung des Biegeverhaltens von sehr dünnen Platten oder auch zur Anordnung der Saugnäpfe an ebenen Flächen von insgesamt dreidimensional geformten Teilen.

Die Verstellung ist bisher überwiegend von Hand ausgeführt worden. Wenn jedoch mit häufig wechselnden Teilen zu rechnen ist, ist dieses Vorgehen unter wirtschaftlichen Gesichtspunkten nicht zu vertreten. Weitgehend automatisierbare Lösungen umfaßten bisher Stellmotoren mit relativ genauen Weggebern und geeigneten Getrieben zur Verstellung der Saugnäpfe. Diese Lösungen waren relativ aufwendig und kostspielig. Sie erhöhten auch mehr oder weniger das Gewischt des Hubrahmens und waren daher auch unter dem Aspekt des Energieverbrauchs ungünstig.

Der Erfindung liegt die Aufgabe zugrunde, eine zusammen mit einem Roboter zu verwendende Greifvorrichtung der obigen Art mit einer einfachen und kostengünstigen Verstellmöglichkeit für die Saugnäpfe auszurüsten.

Diese Aufgabe wird erfindungsgemäß durch eine Greifvorrichtung der obigen Art gelöst, die dadurch gekennzeichnet ist, daß die Saugnäpfe an den äußeren Enden von vier im Kreuz angeordneten, in zwei übereinanderliegenden Ebenen längs verschiebbaren Zahnstangen angebracht sind, daß im Zentrum des durch die Stangen gebildeten Kreuzes ein in einer senkrechten Achse gelagertes Zahnrad vorgesehen ist, das sich über beide übereinanderliegenden Ebenen erstreckt, daß die Zahnstangen jeweils paarweise von diametral gegenüberliegenden Seiten hier mit dem Zahnrad kämmen und daß eine Steuerstange mit Zahnstangenprofil in einer dritten Ebene mit dem Zahnrad in Eingriff steht, die an einem radial-äußeren Ende eine Eingriffseinrichtung aufweist.

Bei einem derartigen Mechanismus erfolgt die radiale Verstellung der Zahnstangen dadurch, daß das Eingriffsglied in Eingriff mit einem festen Punkt in der Umgebung der Greifvorrichtung gebracht und die Greifvorrichtung sodann durch den zugehörigen Roboter derart waagerecht verfahren wird, daß die Steuerstange radial nach außen oder innen verschoben wird. Bei Längsverschiebung der Steuerstange dreht sich das Zahnrad, und durch die Drehung des Zahnrades werden die vier Zahnstangen aus- oder eingefahren.

Vorzugsweise liegen die Zahnstangen zwischen einer oberen und einer unteren Spannplatte, zwischen denen sie in Längsführungen geführt sind. Wenn die richtige Einstellung der Zahnstangen gefunden ist, können sie durch Zusammenspannen der Spannplatten festgeklemmt werden. Zu diesem Zweck sind auf der oberen oder unter der unteren Spannplatte beispielsweise Luftzylinder vorgesehen, deren Kolbenstangen durch die entsprechende Spannplatte hindurch mit der gegenüberliegenden Spannplatte verbunden sind.

Im folgenden werden bevorzugte Ausführungsbeispiele der Erfindung anhand der beigefügten Zeichnung näher erläutert.
- Fig. 1: ist eine Draufsicht auf eine erfindungsgemäße Greifvorrichtung in einer Position oberhalb eines Blechteils, in der eine obere Spannplatte als durchsichtig behandelt wird;
- Fig. 2: ist eine Ansicht in Richtung des Pfeiles A in Fig. 1;
- Fig. 3: zeigt eine Einzelheit innerhalb des Kreises Z in Fig. 2.

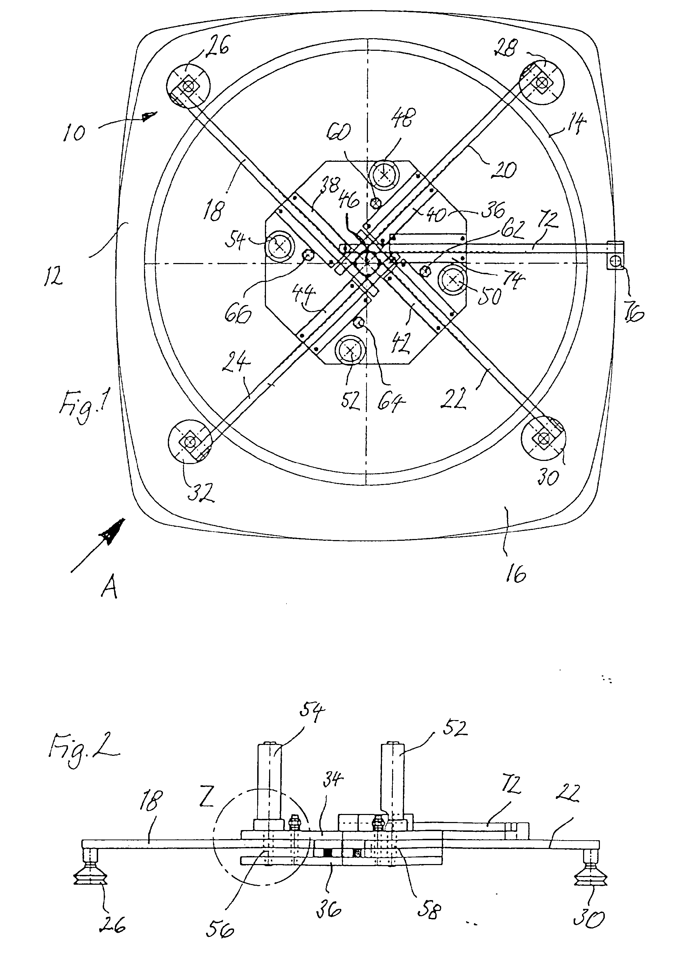

Eine erfindungsgemäße Greifvorrichtung gemäß Fig. 1 ist insgesamt mit 10 bezeichnet. Die Greifvorrichtung 10 ist oberhalb eines Blechteils 12 gezeigt, das ein kreisförmiges Mittelteil 14 aufweist, in dem aus bestimmten Gründen Saugnäpfe nicht angreifen können, weil dieses Mittelteil beispielsweise uneben oder ausgestanzt ist. Saugnäpfe können daher nur in dem äußeren Randstreifen 16 angesetzt werden.

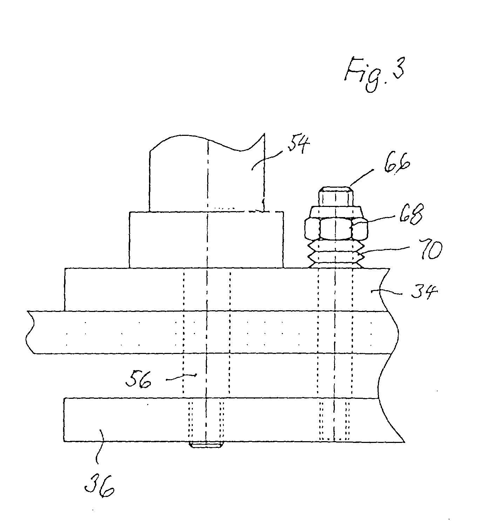

Die erfindungsgemäße Greifvorrichtung weist vier kreuzförmig zueinander angeordnete Arme in Form von Zahnstangen 18,20,22,24 auf, an deren äußeren Enden sich Saugnäpfe 26,28,30,32 befinden und deren innere Enden zwischen zwei deckungsgleichen, einen Abstand zueinander aufweisenden Spannplatten 34,36 liegen (Fig. 2). In Fig. 1 wird die obere Spannplatte 34 als durchsichtig behandelt, so daß die zwischen den Spannplatten in Längsführungen 38,40,42,44 geführten Zahnstangen 18,20,22,24 sichtbar sind.

Im Zentrum der Spannplatten 34,36 befindet sich ein in einer senkrechten Achse drehbar gelagertes Zahnrad 46. Die inneren Enden der Zahnstangen 18,20,22,24 kämmen jeweils paarweise auf diametral gegenüberliegenden Seiten mit diesem Zahnrad 46. Das bedeutet, daß die in jeweils einer der beiden Richtungen der kreuzförmigen Anordnung verlaufenden Zahnstangen um die Breite bzw. den Durchmesser des Zahnrades parallel versetzt sind, wie aus Fig. 1 hervorgeht. Die paarweise einander zugeordneten Zahnstangen liegen in bezug auf die Höhe jeweils in einer Ebene. In bezug auf eine waagerechte Ebene stehen die Zahnrad-Paare zueinander im wesentlichen senkrecht.

Da die Zahnstangen 18,20,22,24 einander im Umkreis des Zahnrades 46 kreuzen, liegen die parallelen Zahnstangen 18,22 einerseits sowie 20,24 andererseits in übereinander angeordneten Ebenen zwischen den Spannplatten 34,36.

Auf der oberen Spannplatte 34 befinden sich entlang dem Randstreifen der beiden Spannplatten in gleichen Winkelabständen senkrecht stehende Luftzylinder 48,50,52,54. Kolbenstangen 56,58 der Luftzylinder durchdringen die obere Spannplatte 34 und sind mit ihrem unteren Ende mit Hilfe eines Gewindeabschnitts in die untere Spannplatte 36 eingeschraubt. Auf diese Weise sind die Luftzylinder 48,50,52,54 in der Lage, die Spannplatten 34,36 zusammenzuziehen und auseinanderzudrücken.

Für eine stabile Führung während dieser Spann- und Entspannungsbewegung sind vier Führungsbolzen 60,62,64,66 vorgesehen. Diese durchdringen ebenfalls, wie die Kolbenstange 56,58, die obere Spannplatte 34 und sie weisen ebenfalls einen unteren, nicht bezeichneten Gewindeabschnitt auf, der in die untere Spannplatte 36 eingeschraubt ist. Die Führungsbolzen 60,62,64,66 ragen nach oben über die obere Spannplatte hinaus. Auf dem oberen, über die Spannplatte 34 hinausragenden Abschnitt befindet sich eine Mutter 68. Zwischen der Mutter und der oberen Spannplatte 34 befindet sich ein Tellerfederpaket 70. Die Führungsbolzen 60,62,64,66 dienen ausschließlich der Vertikalführung der oberen Spannplatte 34 in bezug auf die untere Spannplatte 36, während die Position der oberen Spannplatte 34 zur unteren Spannplatte 36 durch die Luftzylinder 48,50,52,54 bestimmt wird. Der obere Abschnitt der Führungsbolzen durchläuft daher die obere Spannplatte 34 in einer nicht gezeigten Bohrung mit verhältnismäßig genauer Passung. Das Tellerfederpaket 70 bewirkt, daß die Spannplatten 34,36 normalerweise zusammengespannt werden. In diesem Fall müssen die Luftzylinder nur zum Lösen der Spannplatten mit Druckluft beaufschlagt werden.

Über der oberen Spannplatte 34 liegt radial verschiebbar eine Steuerstange 72. Diese Steuerstange 72 wird in einer Führung 74 auf der oberen Spannplatte 34 im wesentlichen radial geführt. Auch diese Steuerstange 72 ist als Zahnstange ausgebildet. Sie kämmt mit einem oberhalb der oberen Spannplatte liegenden Abschnitt des Zahnrades 46, wie aus Fig. 1 hervorgeht. Wenn die Steuerstange 72 in Radialrichtung verschoben wird, dreht sich das gesamte Zahnrad 46, so daß die Zahnstangen 18,20,22,24 entsprechend der Drehrichtung ausgefahren oder eingezogen werden. Die Steuerstange dient daher zur Einstellung der radialen Position der Saugnäpfe 26,28,30,32.

Am äußeren Ende der Steuerstange 72 befindet sich, als Beispiel dargestellt, eine Öse 76. Wie erwähnt, ist die erfindungsgemäße Greifvorrichtung vorgesehen zur Verwendung im Zusammenhang mit einem Roboter, der die Greifvorrichtung in geeigneter Weise erfaßt.

Wenn die Positionen der Saugnäpfe 26,28,30,32 wegen eines Wechsels des zu transportierenden Produktes verändert werden sollen, führt der nicht dargestellte Roboter die Greifvorrichtung mit der Öse 76 zu einer festen Eingriffsposition, beispielsweise einem aufragenden Dorn. Bei der anschließenden horizontalen Bewegung der Greifvorrichtung bewegt sich die Steuerstange 72 relativ zu der Greifvorrichtung, so daß die Zahnstangen 18,20,22,24 radial verstellt werden können. Da der Roboter ohnehin eine Steuerungseinrichtung aufweist, die eine sehr genaue Bewegung in allen Richtungen einschließlich der Horizontalrichtung ermöglicht, ist es nicht notwendig, genau arbeitende Stellmotoren für die Zahnstangen 18,20,22,24 zur Radialverstellung der Saugnäpfe 26,28,30,32 vorzusehen.

Die ohnehin vorhandene Möglichkeit des Roboters und insbesondere die Fähigkeit des Roboters, genaue Horizontalbewegungen durchzuführen, werden daher für die Verstellung der Saugnäpfe genutzt. Auf der anderen Seite erhöht sich das Gewicht der gesamten Greifvorrichtung nur um den Anteil der Steuerstange, die verhältnismäßig leicht ausgeführt werden kann, da nur geringe Kräfte zu übertragen sind. Auf einen oder mehrere Antriebsmotoren mit entsprechenden Getrieben kann verzichtet werden. Es ist auch nicht notwendig, elektrische oder pneumatische Anschlußleitungen für den Verstellmechanismus vorzusehen, die bei Bewegungen des Greifmechanismus mitgeführt werden müßten. Die erfindungsgemäße Lösung stellt also eine sehr erhebliche Vereinfachung und Verbilligung dar.

## Patentansprüche

1. Greifvorrichtung für dünne, plattenförmige Teile, insbesondere Bleche, mit einer Anzahl von an der Unterseite eines Hubrahmens angeordneten Saugnäpfen (26,28,30,32), **dadurch gekennzeichnet, daß** die Saugnäpfe (26,28,30,32) an den äußeren Enden von vier im Kreuz angeordneten, in zwei übereinanderliegenden Ebenen längsverschiebbar geführten Zahnstangen (18,20,22,24) angebracht sind, daß im Zentrum des durch die Zahnstangen gebildeten Kreuzes ein in einer senkrechten Achse gelagertes Zahnrad (46) vorgesehen ist, das sich über beide übereinanderliegenden Ebenen erstreckt, daß die Zahnstangen (18,20,22,24) jeweils paarweise von diametral gegenüberliegenden Seiten her mit dem Zahnrad (46) kämmen, und daß eine Steuerstange (72) mit Zahnstangenprofil in einer dritten Ebene mit dem Zahnrad (46) in Eingriff steht, die an einem radial-äußeren Ende eine Eingriffseinrichtung (76) aufweist.

2. Greifvorrichtung nach Anspruch 1, **dadurch gekennzeichnet, daß** die vier Zahnstangen (18,20,22,24) zwischen einer oberen und einer unteren Spannplatte (34,36) angeordnet sind.

3. Greifvorrichtung nach Anspruch 2, **dadurch gekennzeichnet, daß** die Spannplatten (34,36) zur Festlegung der Zahnstangen (18,20,22,24) zusammenspannbar sind.

4. Greifvorrichtung nach Anspruch 2 oder 3, **dadurch gekennzeichnet, daß** zwischen den Spannplatten (34,36) Längsführungen (38,40,42,44) für die Zahnstangen (18,20,22,24) vorgesehen sind.

5. Greifvorrichtung nach einem der Ansprüche 2 bis 4, **dadurch gekennzeichnet, daß** auf der oberen oder unter der untereren Spannplatte (34,36) Luftzylinder (48,50,52,54) angeordnet sind, deren Kolbenstangen (56,58) die betreffende Spannplatte (34) durchdringen und mit der anderen Spannplatte (36) fest verbunden sind.

6. Greifvorrichtung nach einem der Ansprüche 2 bis 5, **dadurch gekennzeichnet, daß** Führungsbolzen (60,62,64,66) vorgesehen sind, die fest in eine der Spannplatten (36) eingeschraubt sind und die andere Spannplatte in einer Führungsbohrung durchdringen.
